# EUROPÄISCHE PATENTSCHRIFT

(11) **EP 3 362 697 B1**
(45) Veröffentlichungstag und Bekanntmachung des Hinweises auf die Patenterteilung: **09.12.2020**
(21) Anmeldenummer: 16798396.4
(22) Anmeldetag: 06.10.2016
(51) Int. Cl.: F16D 13/58

(54) **DECKELANORDNUNG FÜR EINE REIBUNGSKUPPLUNG**
COVER ASSEMBLY FOR A FRICTION CLUTCH
ENSEMBLE COUVERCLE POUR UN EMBRAYAGE À FRICTION

(30) Priorität: 12.10.2015 DE 102015219734
(43) Veröffentlichungstag der Anmeldung: 22.08.2018
(73) Patentinhaber: Schaeffler Technologies AG & Co. KG, 91074 Herzogenaurach (DE)
(72) Erfinder: KRISTÓF, Daniel, 9800 Vasvár (HU); HAVASSY, Balázs, 1028 Budapest (HU)
(86) Internationale Anmeldenummer: PCT/DE2016/200464
(87) Internationale Veröffentlichungsnummer: WO 2017/063647

(56) Entgegenhaltungen:
- WO-A1-98/39574
- DE-B4- 10 080 929
- FR-A1- 2 459 904

## Beschreibung

Die Erfindung betrifft eine Deckelanordnung für eine Reibungskupplung gemäß dem Oberbegriff des Patentanspruchs 1, insbesondere zum Kuppeln einer Antriebswelle eines Kraftfahrzeuges mit mindestens einer Getriebeeingangswelle eines Getriebes. Die Deckelanordnung umfasst einen Kupplungsdeckel, eine Anpressplatte, ein, in einer axialen Richtung zwischen Kupplungsdeckel und Anpressplatte angeordnetes und um ein Schwenklager schwenkbares Betätigungselement, insbesondere eine Tellerfeder, zum Verlagern der Anpressplatte gegenüber dem Kupplungsdeckel in der axialen Richtung.

Aus der WO 2015/043597 A1 ist eine Deckelanordnung bekannt. Dort ist an dem Kupplungsdeckel ein Haltehaken über eine Nietverbindung befestigt. Der Haltehaken bildet eine Stützfeder für das Betätigungselement der Reibungskupplung. Der Haltehaken erstreckt sich ausgehend von dem Kupplungsdeckel in der axialen Richtung über das Betätigungselement hinaus und klemmt so das Betätigungselement zwischen Haltehaken und Kupplungsdeckel ein. Zwischen Betätigungselement und Kupplungsdeckel ist weiter ein Kippring angeordnet, der ein Schwenklager für das Betätigungselement bildet.

Es sind weitere Ausführungsformen solcher Deckelanordnungen bekannt, bei denen sich der Kupplungsdeckel selber in der axialen Richtung über das Betätigungselement hinaus erstreckt und dort eine Auflage bildet für eine Stützfeder.

Bei diesen Deckelanordnungen ist die Lage des Kipprings bzw. die Lage des Schwenklagers für das Betätigungselement durch eine entsprechende Form des Kupplungsdeckels vorgegeben.

Aus der WO 98/39574 A1 ist eine Deckelanordnung bekannt, die auf den Oberbegriff des Patentanspruchs 1 lesbar ist.

Der vorliegenden Erfindung liegt die Aufgabe zugrunde, die aus dem Stand der Technik bekannten Nachteile zumindest teilweise zu überwinden und insbesondere eine Deckelanordnung aufzuzeigen, bei der insbesondere die Funktionen von Kippring, Schwenklager und Stützring durch eine alternative Ausführung von Bauteilen übernommen wird. Insbesondere soll das Schwenklager unabhängig vom Kupplungsdeckel anzuordnen sein. Weiter soll die Deckelanordnung einfach zu montieren sein.

Die Aufgabe wird durch die Merkmale des unabhängigen Patentanspruchs 1 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung betrifft eine Deckelanordnung für eine Reibungskupplung, insbesondere zum Kuppeln einer Antriebswelle eines Kraftfahrzeuges mit mindestens einer Getriebeeingangswelle eines Getriebes, zumindest aufweisend
- einen Kupplungsdeckel,
- eine Anpressplatte,
- ein, in einer axialen Richtung zwischen Kupplungsdeckel und Anpressplatte angeordnetes und um ein Schwenklager schwenkbares Betätigungselement zum Verlagern der Anpressplatte gegenüber dem Kupplungsdeckel, und
- mindestens ein Halteelement;
wobei das mindestens eine Halteelement am Kupplungsdeckel befestigt ist und sich ausgehend vom Kupplungsdeckel mit einer Basis entlang der axialen Richtung über das Betätigungselement hinaus erstreckt und mindestens einen mittleren Arm aufweist, der sich, ausgehend von der Basis zwischen Kupplungsdeckel und Betätigungselement in einer radialen Richtung erstreckt und das Schwenklagert bildet; und weiter mindestens einen inneren Arm aufweist, der sich, ausgehend von der Basis in der radialen Richtung erstreckt, so dass das Betätigungselement zwischen dem mittleren Arm und dem inneren Arm angeordnet ist.

Insbesondere weist die Deckelanordnung eine Drehachse auf und der Kupplungsdeckel erstreckt sich in der radialen Richtung außen über Betätigungselement und Anpressplatte. Insbesondere weist der Kupplungsdeckel einen in der radialen Richtung nach innen weisenden Rand auf, an dem das mindestens eine Halteelement angeordnet ist.

Insbesondere weist das Halteelement mindestens einen äußeren Arm auf, der sich, ausgehend von der Basis in der radialen Richtung erstreckt, so dass der Kupplungsdeckel (in der axialen Richtung) zwischen dem äußeren Arm und dem mittleren Arm angeordnet ist.

Bevorzugt ist das Halteelement einstückig ausgeführt, d. h. es ist insbesondere nicht aus mehreren Einzelteilen zusammengefügt worden. Insbesondere ist das Halteelement durch Umformformen hergestellt, insbesondere durch Biegen.

Insbesondere weist das Halteelement ein Rastelement auf, das in eine Rastvorrichtung (z. B. eine Nut) am Kupplungsdeckel eingreift, so dass eine Position des Halteelements am Kupplungsdeckel zumindest in der radialen Richtung fixiert ist.

Bevorzugt ist das Halteelement einstückig ausgeführt und erzeugt durch seine Form eine selbsttätige Fixierung am Kupplungsdeckel. Insbesondere sind also keine weiteren Verbindungselemente (z. B. Klebeverbindung, Schweißverbindung, Nietverbindung) zur Fixierung des Halteelements am Kupplungsdeckel erforderlich).

Insbesondere weist die Deckelanordnung eine Mehrzahl von Halteelementen (insbesondere mehr als vier, bevorzugt mehr als acht oder sogar mehr als 10) auf, die entlang einer Umfangsrichtung (gleichmäßig voneinander beabstandet) an einem Rand des Kupplungsdeckels angeordnet sind, wobei die Halteelemente das Schwenklager für das Betätigungselement bilden und das Betätigungselement in der radialen Richtung gegenüber dem Kupplungsdeckel und einer gemeinsamen Drehachse zentrieren. Insbesondere weist der Rand in der radialen Richtung nach innen und die Haltelemente werden in der radialen Richtung nach außen auf den Kupplungsdeckel aufgeschoben, wobei das Halteelement zumindest durch eine Klemmung des Kupplungsdeckels zwischen einem äußeren Arm, der sich, ausgehend von der Basis in der radialen Richtung erstreckt, und dem mittleren Arm des Halteelements am Kupplungsdeckel fixiert ist.

Insbesondere weist der Kupplungsdeckel und/oder das Halteelement eine angepasste Form auf, so dass ein Aufschieben des Halteelements auf den Rand erleichtert ist. Z. B. weist der Kupplungsdeckel oder das Halteelement in einem Bereich die Form einer Rampe auf, die während des Aufschiebens ein elastisches Verbiegen des äußeren Arms gegenüber dem mittleren Arm bewirkt, so bei weiterem Verschieben in der radialen Richtung ein Zurückfedern in eine Rastvorrichtung am Kupplungsdeckel erfolgt.

Insbesondere sind Führungen am Kupplungsdeckel vorgesehen, die eine Lage des Halteelements in der Umfangsrichtung, ggf. auch während des Aufschiebens auf den Rand, fixiert.

Insbesondere sind mehrere Rastpositionen für das Halteelement am Kupplungsdeckel vorgesehen. In einer ersten Rastposition ist das Halteelement am Kupplungsdeckel angeordnet und ist selbsttätig fixiert. In dieser ersten Rastposition kann z. B. das Betätigungselement am Kupplungsdeckel angeordnet werden. Bevorzugt wird erst dann das Halteelement in der radialen Richtung weiter nach außen und weiter auf den Rand verschoben, wobei das Halteelement in eine zweite Rastposition gelangt. In der zweiten Rastposition ist das Halteelement, z. B. über das Rastelement und die Rastvorrichtung am Kupplungsdeckel selbsttätig fixiert, wobei zusätzlich das Betätigungselement zwischen dem mittleren Arm und dem inneren Arm angeordnet ist.

Insbesondere liegt in der zweiten Rastposition die Basis zumindest teilweise am Rand an, so dass das Halteelement den Kupplungsdeckel in der radialen Richtung zwischen Rastelement und Basis einklemmt.

Bevorzugt weist das Betätigungselement eine Mehrzahl von Federzungen auf, die sich ausgehend von einem Körper des Betätigungselements in der radialen Richtung erstrecken und in einer Umfangsrichtung jeweils durch Zwischenräume voneinander beabstandet sind, wobei sich das Halteelement ausgehend vom Kupplungsdeckel mit einer Basis entlang der axialen Richtung durch den Zwischenraum hindurch erstreckt.

Es wird weiter ein Kraftfahrzeug vorgeschlagen, zumindest aufweisend eine Reibungskupplung zum Kuppeln einer Antriebswelle eines Kraftfahrzeuges mit mindestens einer Getriebeeingangswelle eines Getriebes, wobei die Reibungskupplung eine erfindungsgemäße Deckelanordnung.

Bei der vorgeschlagenen Deckelanordnung kann die Lage eines Schwenklagers durch Austausch der Halteelemente verändert werden. Damit ist eine Neufertigung des Kupplungsdeckels nicht länger erforderlich. Weiter kann der Kupplungsdeckel einfacher hergestellt werden, wobei z. B. bisher notwendige Löcher für Befestigungselemente zur Fixierung der Stützfeder nicht mehr erforderlich sind. Durch den Entfall der Stützfeder als zusätzliches Bauteil wird Bauraum in der Reibungskupplung eingespart.

Die Erfindung sowie das technische Umfeld werden nachfolgend anhand der Figuren näher erläutert. Die Figuren zeigen besonders bevorzugte Ausführungsbeispiele, auf die die Erfindung jedoch nicht beschränkt ist. Insbesondere ist darauf hinzuweisen, dass die Figuren und insbesondere die dargestellten Größenverhältnisse nur schematisch sind. Gleiche Bezugszeichen bezeichnen gleiche Gegenstände. Es zeigen:
- Fig. 1:: eine Deckelanordnung einer Reibungskupplung aus dem Stand der Technik in einer Seitenansicht im Schnitt;
- Fig. 2:: eine weitere Deckelanordnung einer Reibungskupplung aus dem Stand der Technik in einer Seitenansicht im Schnitt;
- Fig. 3:: eine Deckelanordnung einer Reibungskupplung in einer Seitenansicht im Schnitt;
- Fig. 4:: die Deckelanordnung aus Fig. 3 in einer weiteren Seitenansicht im Schnitt;
- Fig. 5:: ein Halteelement in perspektivischer Ansicht;
- Fig. 6:: ein Halteelement in einer Seitenansicht;
- Fig. 7:: eine Deckelanordnung mit einem ersten Schwenklager in einer Seitenansicht im Schnitt;
- Fig. 8:: eine Deckelanordnung mit einem zweiten Schwenklager in einer Seitenansicht im Schnitt;
- Fig. 9:: eine Deckelanordnung von oben in perspektivischer Ansicht;
- Fig. 10:: die Deckelanordnung aus Fig. 9 von unten in perspektivischer Ansicht;
- Fig. 11:: ein weiteres Halteelement in einer Seitenansicht;
- Fig. 12:: einen Kupplungsdeckel mit einem Halteelement aus Fig. 11 in einer ersten Rastposition in einer Seitenansicht im Schnitt;
- Fig. 13:: den Kupplungsdeckel aus Fig. 12 mit Betätigungselement in einer Seitenansicht im Schnitt;
- Fig. 14:: den Kupplungsdeckel mit einem Halteelement aus Fig. 11 in einer zweiten Rastposition in einer Seitenansicht im Schnitt;
- Fig. 15:: einen Kupplungsdeckel mit einem dritten Halteelement in einer perspektivischen Ansicht;
- Fig. 16:: den Kupplungsdeckel aus Fig. 15 in einer Seitenansicht im Schnitt;
- Fig. 17: den Kupplungsdeckel aus Fig. 15 in einer perspektivischen Ansicht;
- Fig. 18:: einen weiteren Kupplungsdeckel mit einem dritten Halteelement in einer perspektivischen Ansicht;
- Fig. 19:: den Kupplungsdeckel aus Fig. 18 in einer perspektivischen Ansicht;
- Fig. 20:: einen anderen Kupplungsdeckel mit einem vierten Halteelement in einer perspektivischen Ansicht;
- Fig. 21:: den anderen Kupplungsdeckel aus Fig. 20 in einer perspektivischen Ansicht;
- Fig. 22:: einen weiteren Kupplungsdeckel mit einer Aufnahme für ein fünftes Haltelement in einer perspektivischen Ansicht;
- Fig. 23:: den weiteren Kupplungsdeckel mit dem fünften Halteelement aus Fig. 22 in einer Seitenansicht;
- Fig. 24:: das fünfte Halteelement in einer Seitenansicht; und
- Fig. 25:: das fünfte Halteelement aus Fig. 24 in einer perspektivischen Ansicht.

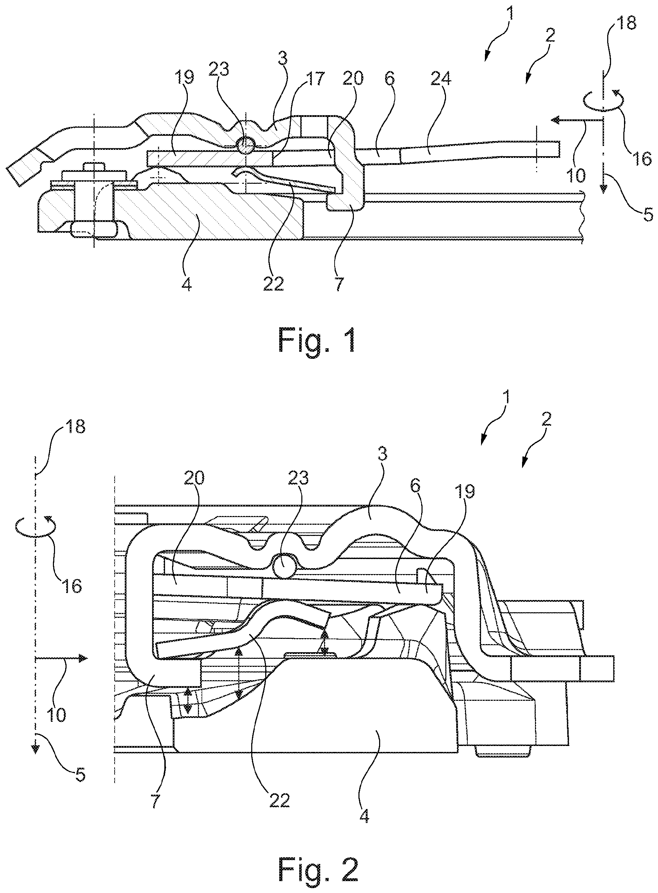

Fig. 1 zeigt eine Deckelanordnung 1 einer Reibungskupplung 2 aus dem Stand der Technik in einer Seitenansicht im Schnitt. Die Deckelanordnung 1 umfasst einen Kupplungsdeckel 3, eine Anpressplatte 4, ein, in einer axialen Richtung 5 zwischen Kupplungsdeckel 3 und Anpressplatte 4 angeordnetes und um einen Schwenklager 21 schwenkbares Betätigungselement 6, insbesondere eine Tellerfeder, zum Verlagern der Anpressplatte 4 gegenüber dem Kupplungsdeckel 3 in der axialen Richtung 5. Hier erstreckt sich der Kupplungsdeckel 3 selber in der axialen Richtung 5 über das Betätigungselement 6 hinaus und bildet dort eine Auflage für eine Stützfeder 22. Die Stützfeder 22 klemmt das Betätigungselement 6 zwischen Stützfeder 22 und Kupplungsdeckel 3 ein. Zwischen Betätigungselement 6 und Kupplungsdeckel 3 ist weiter ein Kippring 23angeordnet, der ein Schwenklager 22 für das Betätigungselement 6 bildet. Das Betätigungselement 6 ist hier eine Tellerfeder, die in der radialen Richtung 10 außen einen ringförmigen Körper 19 (Kraftrand) aufweist, von dem ausgehend sich Federzungen 24 in der radialen Richtung 10 nach innen hin zur gemeinsamen Drehachse 18 erstrecken.

Fig. 2 zeigt eine weitere Deckelanordnung 1 einer Reibungskupplung 2 aus dem Stand der Technik in einer Seitenansicht im Schnitt. Hier ist mithilfe der Distanzpfeile der noch verfügbare Bauraum innerhalb der Reibungskupplung 2 verdeutlicht. Insbesondere ist erkennbar, dass eine in der axialen Richtung 5 verkürzte Bauform hier nicht möglich ist.

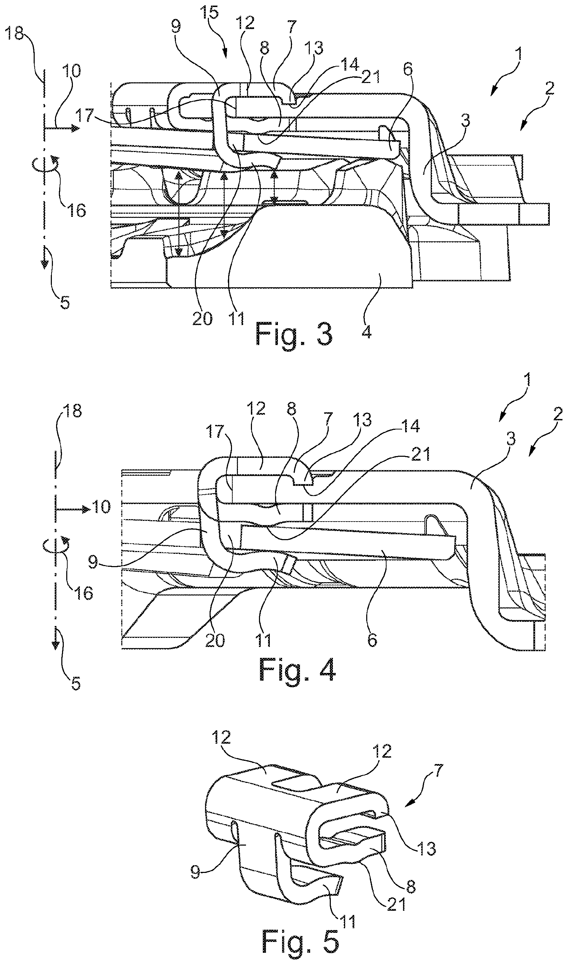

Fig. 3 zeigt eine Deckelanordnung 1 einer Reibungskupplung 2 in einer Seitenansicht im Schnitt. Fig. 4 zeigt die Deckelanordnung aus Fig. 3 in einer weiteren Seitenansicht im Schnitt. In beiden Figuren 3 und 4 umfasst die Deckelanordnung 1 umfasst einen Kupplungsdeckel 3, eine Anpressplatte 4, ein, in einer axialen Richtung 5 zwischen Kupplungsdeckel 3 und Anpressplatte 4 angeordnetes und um einen Schwenklager 21 schwenkbares Betätigungselement 6, insbesondere eine Tellerfeder, zum Verlagern der Anpressplatte 4 gegenüber dem Kupplungsdeckel 3 in der axialen Richtung 5. Hier ist ein Halteelement 7 am Kupplungsdeckel 3 befestigt. Das Halteelement 7 erstreckt sich ausgehend vom Kupplungsdeckel 3 mit einer Basis 9 entlang der axialen Richtung 5 über das Betätigungselement 6 hinaus und weist einen mittleren Arm 8 auf, der sich, ausgehend von der Basis 9 zwischen Kupplungsdeckel 3 und Betätigungselement 6 in einer radialen Richtung 10 erstreckt und das Schwenklager 21 bildet. Das Halteelement 7 weist weiter einen inneren Arm 11auf, der sich, ausgehend von der Basis 9 in der radialen Richtung 10 erstreckt, so dass das Betätigungselement 6 zwischen dem mittleren Arm 8 und dem inneren Arm 11 angeordnet ist.

In Fig. 3 ist mithilfe der Distanzpfeile der noch verfügbare (und offensichtlich erkennbar viel größere) Bauraum innerhalb der Reibungskupplung 2 verdeutlicht.

Die Deckelanordnung 1 weist eine Drehachse 18 auf und der Kupplungsdeckel 3 erstreckt sich in der radialen Richtung 10 außen über Betätigungselement 6 und Anpressplatte 4. Weiter weist der Kupplungsdeckel 3 einen in der radialen Richtung 10 nach innen weisenden Rand 17auf, an dem das Halteelement 7 angeordnet ist.

Hier weist das Halteelement 7 einen äußeren Arm 12 auf, der sich, ausgehend von der Basis 9 in der radialen Richtung 10 nach außen erstreckt, so dass der Kupplungsdeckel 3 (in der axialen Richtung 5) zwischen dem äußeren Arm 12 und dem mittleren Arm 8 angeordnet ist.

Das Halteelement 7 weist ein Rastelement 13 auf, das in eine Rastvorrichtung 14 (hier eine Nut) am Kupplungsdeckel 3 eingreift, so dass eine Position 15 des Halteelements 7 am Kupplungsdeckel 3 zumindest in der radialen Richtung 10 fixiert ist.

Hier ist das Halteelement 7 einstückig ausgeführt und erzeugt durch seine Form eine selbsttätige Fixierung am Kupplungsdeckel 3. Hier sind also keine weiteren Verbindungselemente (z. B. Klebeverbindung, Schweißverbindung, Nietverbindung) zur Fixierung des Halteelements 7 am Kupplungsdeckel 3 erforderlich).

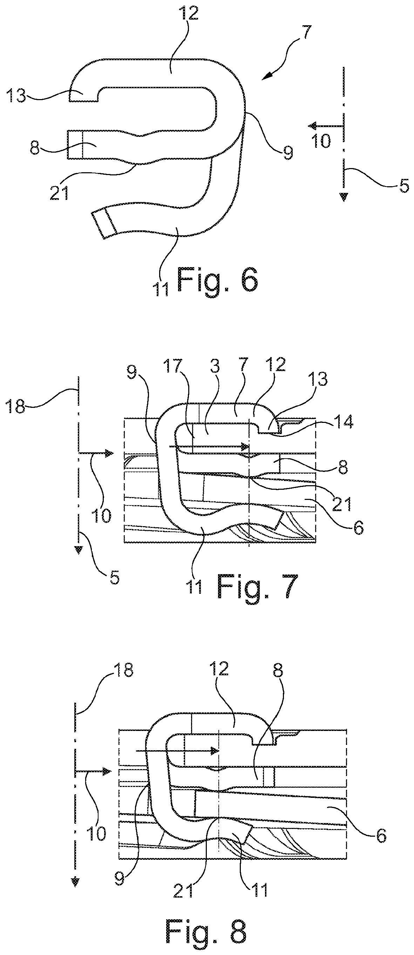

Fig. 5 zeigt ein Halteelement 7 in perspektivischer Ansicht. Fig. 6 zeigt das Halteelement 7 aus Fig. 5 in einer Seitenansicht. Das Halteelement 7 ist einstückig ausgeführt, d. h. es ist nicht aus mehreren Einzelteilen zusammengefügt worden. Das Halteelement 7 erstreckt sich mit einer Basis 9 entlang der axialen Richtung 5 und weist zwei mittlere Arme 8 auf, die sich, ausgehend von der Basis 9 in einer radialen Richtung 10 erstrecken und jeweils das Schwenklager 21 bildet. Das Halteelement 7 weist weiter einen inneren Arm 11auf, der sich, ausgehend von der Basis 9 in der radialen Richtung 10 erstreckt, so dass das Betätigungselement 6 zwischen den mittleren Armen 8 und dem inneren Arm 11 anordenbar ist. Weiter weist das Halteelement 7 hier zwei zueinander parallele äußere Arm 12 auf, die sich, ausgehend von der Basis 9 in der radialen Richtung 10 erstrecken, so dass der Kupplungsdeckel 3 (in der axialen Richtung 5) zwischen den äußeren Armen 12 und den mittleren Armen 8 angeordnet ist. Das Halteelement 7 weist ein Rastelement 13 auf, das in eine Rastvorrichtung 14 (hier eine Nut) am Kupplungsdeckel 3 eingreift, so dass eine Position 15 des Halteelements 7 am Kupplungsdeckel 3 zumindest in der radialen Richtung 10 fixiert ist.

Fig. 7 zeigt eine Deckelanordnung 1 mit einem ersten Schwenklager 21 in einer Seitenansicht im Schnitt. Fig. 8 zeigt eine Deckelanordnung 1 mit einem zweiten Schwenklager 22 in einer Seitenansicht im Schnitt. Bei der vorgeschlagenen Deckelanordnung 1 kann die Lage eines Schwenklagers 21 in der radialen Richtung 10 durch Austausch der einfach herzustellenden Halteelemente 7 verändert werden. Damit ist eine Neufertigung des Kupplungsdeckels 3 nicht länger erforderlich.

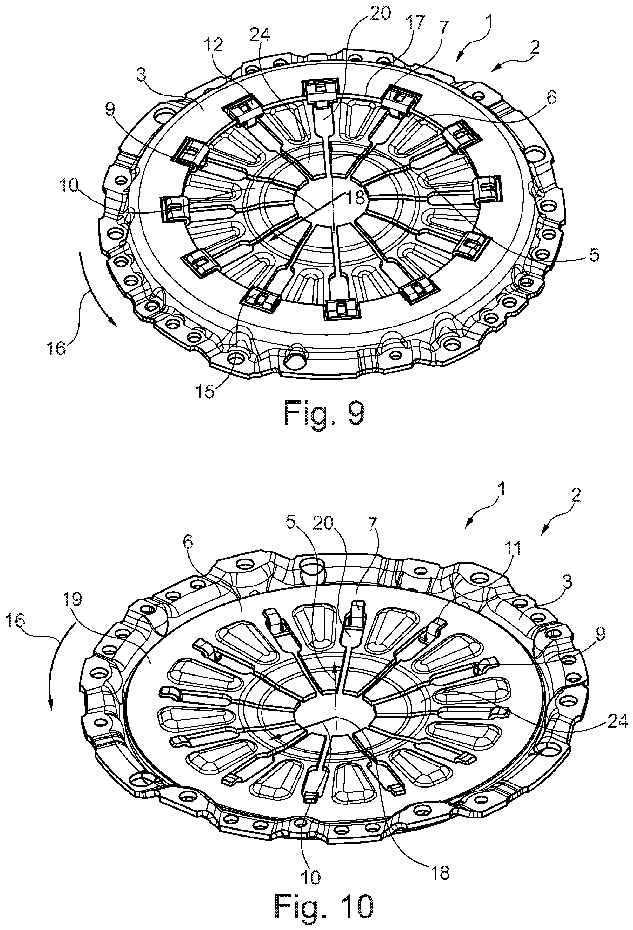

Fig. 9 zeigt eine Deckelanordnung 1 von oben in perspektivischer Ansicht. Fig. 10 zeigt die Deckelanordnung aus Fig. 9 von unten in perspektivischer Ansicht. Die Deckelanordnung 1 weist eine Mehrzahl von Halteelementen 7 auf, die entlang einer Umfangsrichtung 16 gleichmäßig voneinander beabstandet an einem Rand 17 des Kupplungsdeckels 3 angeordnet sind, wobei die Halteelemente 7 das Schwenklager 21 für das Betätigungselement 6 bilden und das Betätigungselement 6 in der radialen Richtung 10 gegenüber dem Kupplungsdeckel 3 und einer gemeinsamen Drehachse 18 zentrieren.

Der Rand 17 des Kupplungsdeckels 3 weist in der radialen Richtung 10 nach innen. Die Haltelemente 7 werden in der radialen Richtung 10 nach außen auf den Kupplungsdeckel 3 aufgeschoben, wobei die Halteelemente 7 durch eine Klemmung des Kupplungsdeckels 3 zwischen den äußeren Armen 12, die sich, ausgehend von der Basis 9 in der radialen Richtung 10 nach außen erstrecken, und den mittleren Armen 8 des Halteelements 7 am Kupplungsdeckel 3 fixiert sind. Das Halteelement 7 weist weiter einen inneren Arm 11auf, der sich, ausgehend von der Basis 9 in der radialen Richtung 10 nach außen erstreckt und so das Betätigungselement 6 zwischen den mittleren Armen 8 und dem inneren Arm 11 aufnimmt.

Die Basis 9 erstreckt sich in der axialen Richtung 5 durch den Zwischenraum 20 zwischen den Federzungen 24 des Betätigungselements 6 hindurch. Damit kann auch die Lage des Betätigungselements 6 in der Umfangsrichtung 16 durch die Halteelemente 7 festgelegt werden.

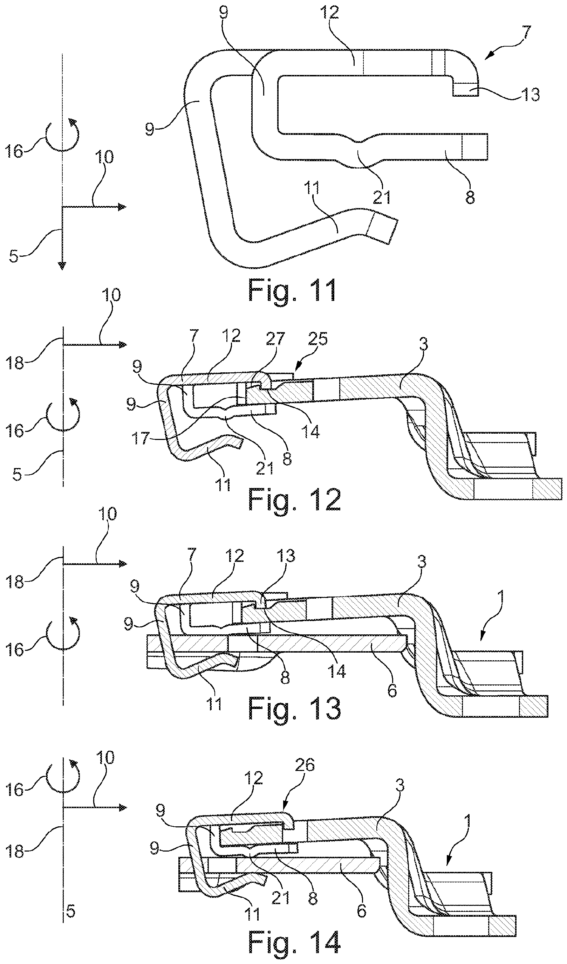

Fig. 11 zeigt ein weiteres Halteelement 7 in einer Seitenansicht. Das Halteelement 7 ist einstückig ausgeführt. Das Halteelement 7 erstreckt sich mit einer Basis 9 entlang der axialen Richtung 5 und weist zwei mittlere Arme 8 auf, die sich, ausgehend von der Basis 9 in einer radialen Richtung 10 erstrecken und jeweils das Schwenklager 21 bildet. Das Halteelement 7 weist weiter einen inneren Arm 11auf, der sich, ausgehend von der Basis 9 in der radialen Richtung 10 erstreckt, so dass das Betätigungselement 6 zwischen den mittleren Armen 8 und dem inneren Arm 11 anordenbar ist. Weiter weist das Halteelement 7 einen äußeren Arm 12 auf, der sich, ausgehend von der Basis 9 in der radialen Richtung 10 erstreckt, so dass der Kupplungsdeckel 3 (in der axialen Richtung 5) zwischen dem äußeren Arm 12 und den mittleren Armen 8 angeordnet ist. Das Halteelement 7 weist ein Rastelement 13 auf, das in eine Rastvorrichtung 14 (hier eine Nut) am Kupplungsdeckel 3 eingreift, so dass eine Position 15 des Halteelements 7 am Kupplungsdeckel 3 zumindest in der radialen Richtung 10 fixiert ist. Hier ist die Basis 9 geteilt ausgeführt. Ein Teil der Basis 9 verbindet den inneren Arm 11 mit dem äußeren Arm 12, der andere Teil der Basis verbindet den mittleren Arm 8 mit dem äußeren Arm 12.

Fig. 12 zeigt einen Kupplungsdeckel 3 mit dem Halteelement 7 aus Fig. 11 in einer ersten Rastposition 25 in einer Seitenansicht im Schnitt. Hier weist der Kupplungsdeckel 3 in einem Bereich die Form einer Rampe 27 auf, die während des Aufschiebens ein elastisches Verbiegen des äußeren Arms 12 gegenüber dem mittleren Arm 8 bewirkt, so bei weiterem Verschieben in der radialen Richtung 10 ein Zurückfedern in eine Rastvorrichtung 14 am Kupplungsdeckel 3 erfolgt.

In der ersten Rastposition 25 ist das Halteelement 7 am Kupplungsdeckel 3 angeordnet und ist selbsttätig fixiert. In dieser ersten Rastposition 25 kann das Betätigungselement 6 am Kupplungsdeckel 3 angeordnet werden; siehe folgende Fig. 13.

Fig. 13 zeigt den Kupplungsdeckel 3 aus Fig. 12 mit Betätigungselement 6 in einer Seitenansicht im Schnitt.

Fig. 14 zeigt den Kupplungsdeckel 3 mit einem Halteelement 7 aus Fig. 11 in einer zweiten Rastposition 26 in einer Seitenansicht im Schnitt. Ausgehend von der Position in Fig. 12 und 13 wird das Halteelement 7 in der radialen Richtung 10 weiter nach außen und weiter auf den Rand 17 verschoben, wobei das Halteelement 7 in die zweite Rastposition 26 gelangt. In der zweiten Rastposition 26 ist das Halteelement 7 über das Rastelement 13 und die Rastvorrichtung 14 am Kupplungsdeckel 3 selbsttätig fixiert, wobei zusätzlich das Betätigungselement 6 zwischen dem mittleren Arm 8 und dem inneren Arm 11 angeordnet ist.

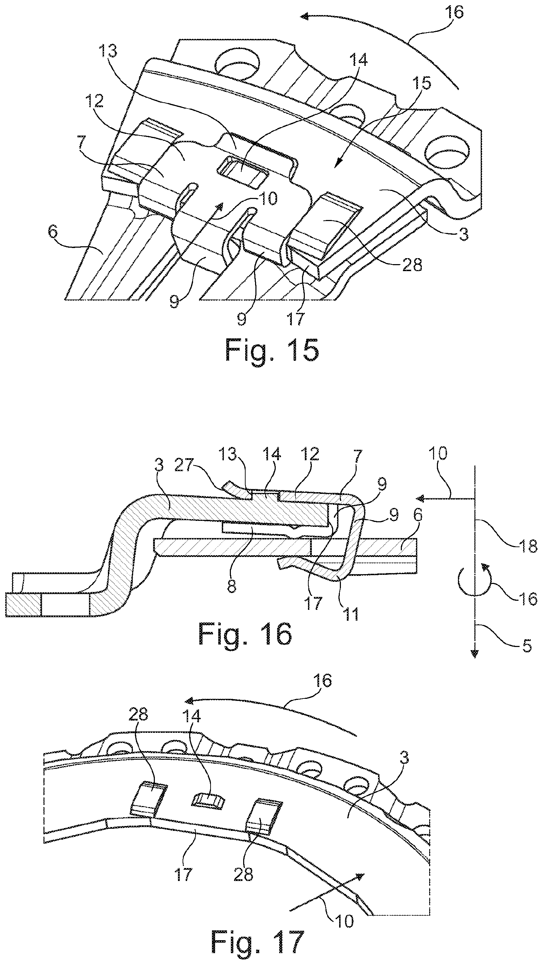

Fig. 15 zeigt einen Kupplungsdeckel 3 mit einem dritten Halteelement 7 in einer perspektivischen Ansicht. Das Halteelement 7 ist auf dem Rand 17 des Kupplungsdeckels 3 angeordnet. Das Halteelement 7 ist über Führungen 28 in der Lage in Umfangsrichtung 16 fixiert. Die Rastvorrichtung 14 wirkt mit dem Rastelement 13 des Halteelements 7 zusammen und fixiert die Position 15 in der radialen Richtung 10.

Fig. 16 zeigt den Kupplungsdeckel 3 aus Fig. 15 in einer Seitenansicht im Schnitt. Es wird auf die Ausführungen zu den Fig. 11 und 14 Bezug genommen. Die Rampe 27 erleichtert das Aufschieben des Halteelements 7 auf den Kupplungsdeckel 3.

Fig. 17 zeigt den Kupplungsdeckel 3 aus Fig. 15 in einer perspektivischen Ansicht. Es sind Führungen 28 vorgesehen, zwischen denen das Halteelement 7 in der Umfangsrichtung 16 fixiert wird.

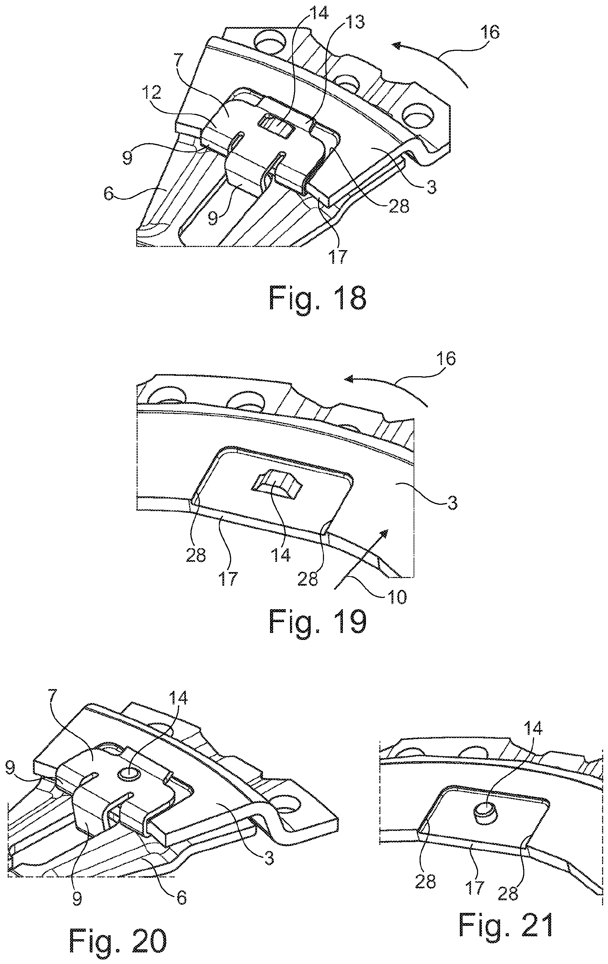

Fig. 18 zeigt einen weiteren Kupplungsdeckel 3 mit einem dritten Halteelement 7 in einer perspektivischen Ansicht. Fig. 19 zeigt den Kupplungsdeckel 3 aus Fig. 18 in einer perspektivischen Ansicht. Es wird auf die Beschreibung der Fig. 15 und 17 verwiesen. In Fig. 19 sind die Führungen 28 in anderer Weise ausgeführt.

Fig. 20 zeigt einen anderen Kupplungsdeckel 3 mit einem vierten Halteelement 7 in einer perspektivischen Ansicht. Fig. 21 zeigt den anderen Kupplungsdeckel 3 aus Fig. 20 in einer perspektivischen Ansicht. Es wird auf die Beschreibung der Fig. 15 und 17 sowie Fig. 18 und 19 verwiesen. Hier ist die Rastvorrichtung 14 als eine Art Zapfen ausgebildet.

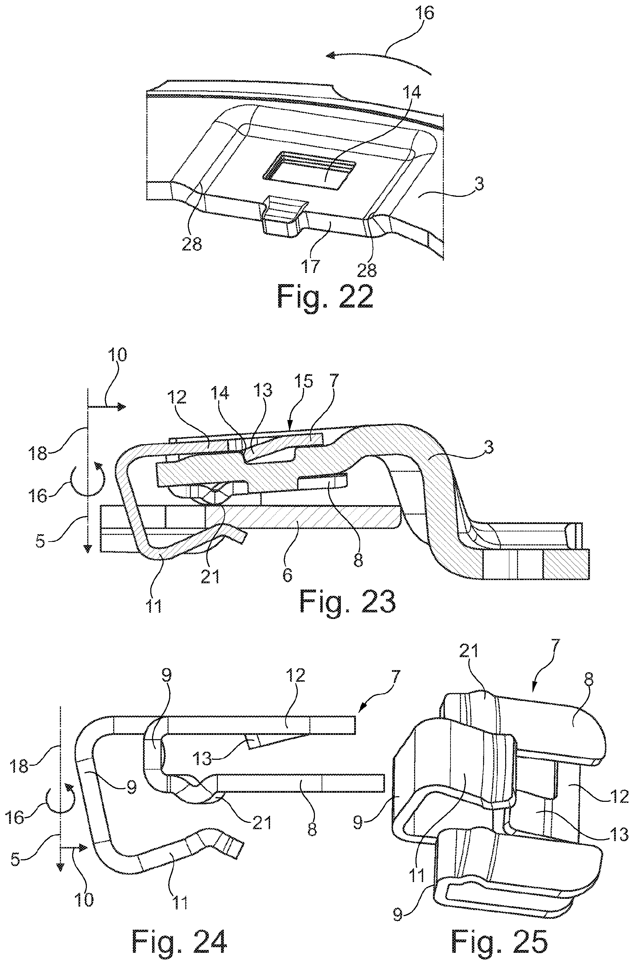

Fig. 22 zeigt einen weiteren Kupplungsdeckel 3 mit einer Aufnahme für ein fünftes Haltelement 7 in einer perspektivischen Ansicht. Die Aufnahme für das Haltelement 7 weist seitliche Führungen 28 und eine Rastvorrichtung 14 auf.

Fig. 23 den weiteren Kupplungsdeckel 3 mit dem fünften Halteelement 7 aus Fig. 22 in einer Seitenansicht. Fig. 24 zeigt das fünfte Halteelement 7 für den Kupplungsdeckel 3 aus Fig. 22 in einer Seitenansicht und Fig. 25 zeigt das fünfte Halteelement 7 aus Fig. 23 in einer perspektivischen Ansicht. Das Halteelement 7 erstreckt sich mit einer Basis 9 entlang der axialen Richtung 5 und weist zwei mittlere Arme 8 auf, die sich, ausgehend von der Basis 9 in einer radialen Richtung 10 erstrecken und jeweils das Schwenklager 21 bildet. Das Halteelement 7 weist weiter einen inneren Arm 11auf, der sich, ausgehend von der Basis 9 in der radialen Richtung 10 erstreckt, so dass das Betätigungselement 6 zwischen den mittleren Armen 8 und dem inneren Arm 11 anordenbar ist. Weiter weist das Halteelement 7 einen äußeren Arm 12 auf, der sich, ausgehend von der Basis 9 in der radialen Richtung 10 erstreckt, so dass der Kupplungsdeckel 3 (in der axialen Richtung 5) zwischen dem äußeren Arm 12 und den mittleren Armen 8 angeordnet ist. Das Halteelement 7 weist ein Rastelement 13 auf, das in eine Rastvorrichtung 14 (hier eine Nut) am Kupplungsdeckel 3 eingreift, so dass eine Position 15 des Halteelements 7 am Kupplungsdeckel 3 zumindest in der radialen Richtung 10 fixiert ist. Hier ist die Basis 9 geteilt ausgeführt. Ein Teil der Basis 9 verbindet den inneren Arm 11 mit dem äußeren Arm 12, der andere Teil der Basis verbindet den mittleren Arm 8 mit dem äußeren Arm 12.

### Bezugszeichenliste

- 1: Deckelanordnung
- 2: Reibungskupplung
- 3: Kupplungsdeckel
- 4: Anpressplatte
- 5: axiale Richtung
- 6: Betätigungselement
- 7: Halteelement
- 8: mittlerer Arm
- 9: Basis
- 10: radiale Richtung
- 11: innerer Arm
- 12: äußerer Arm
- 13: Rastelement
- 14: Rastvorrichtung
- 15: Position
- 16: Umfangsrichtung
- 17: Rand
- 18: Drehachse
- 19: Körper
- 20: Zwischenraum
- 21: Schwenklager
- 22: Stützfeder
- 23: Kippring
- 24: Federzunge
- 25: Erste Rastposition
- 26: zweite Rastposition
- 27: Rampe
- 28: Führung

## Patentansprüche

1. Deckelanordnung (1) für eine Reibungskupplung (2), insbesondere zum Kuppeln einer Antriebswelle eines Kraftfahrzeuges mit mindestens einer Getriebeeingangswelle eines Getriebes, zumindest aufweisend
- einen Kupplungsdeckel (3),
- eine Anpressplatte (4),
- ein, in einer axialen Richtung (5) zwischen Kupplungsdeckel (3) und Anpressplatte (4) angeordnetes und um ein Schwenklager (21) schwenkbares Betätigungselement (6) zum Verlagern der Anpressplatte (4) gegenüber dem Kupplungsdeckel (3), und
- mindestens ein Halteelement (7);
wobei das mindestens eine Halteelement (7) am Kupplungsdeckel (3) befestigt ist und sich ausgehend vom Kupplungsdeckel (3) mit einer Basis (9) entlang der axialen Richtung (5) über das Betätigungselement (6) hinaus erstreckt und mindestens einen mittleren Arm (8) aufweist, der sich, ausgehend von der Basis (9) zwischen Kupplungsdeckel (3) und Betätigungselement (6) in einer radialen Richtung (10) erstreckt und das Schwenklager (21) bildet; und weiter mindestens einen inneren Arm (11) aufweist, der sich, ausgehend von der Basis (9) in der radialen Richtung (10) erstreckt, so dass das Betätigungselement (6) zwischen dem mittleren Arm (8) und dem inneren Arm (11) angeordnet ist, und weiter mindestens einen äußeren Arm (12) aufweist, der sich, ausgehend von der Basis (9) in der radialen Richtung (10) erstreckt, so dass der Kupplungsdeckel (3) zwischen dem äußeren Arm (12) und dem mittleren Arm (8) angeordnet ist, **dadurch gekennzeichnet, dass** ein Teil der Basis (9) den inneren Arm (11) mit dem äußeren Arm (12) verbindet, und der andere Teil der Basis (9) den mittleren Arm (8) mit dem äußeren Arm (12) verbindet.

2. Deckelanordnung (1) nach Anspruch 1, wobei das Halteelement (7) einstückig ausgeführt ist.

3. Deckelanordnung (1) nach einem der vorhergehenden Ansprüche, wobei das Halteelement (7) ein Rastelement (13) aufweist, das in eine Rastvorrichtung (14) am Kupplungsdeckel (3) eingreift, so dass eine Position (15) des Halteelements (7) am Kupplungsdeckel (3) zumindest in der radialen Richtung (10) fixiert ist.

4. Deckelanordnung (1) nach einem der vorhergehenden Ansprüche, wobei das Halteelement (7) einstückig ausgeführt ist und durch seine Form eine selbsttätige Fixierung am Kupplungsdeckel (3) erzeugt.

5. Deckelanordnung (1) nach einem der vorhergehenden Ansprüche, wobei die Deckelanordnung (1) eine Mehrzahl von Halteelementen (7) aufweist, die entlang einer Umfangsrichtung (16) an einem Rand (17) des Kupplungsdeckels (3) angeordnet sind, wobei die Halteelemente (7) das Schwenklager (21) für das Betätigungselement (6) bilden und das Betätigungselement (6) in der radialen Richtung (10) gegenüber dem Kupplungsdeckel (3) und einer gemeinsamen Drehachse (18) zentrieren.

6. Deckelanordnung (1) nach Anspruch 5, wobei der Rand (17) in der radialen Richtung (10) nach innen weist und die Haltelemente (7) in der radialen Richtung (9) nach außen auf den Kupplungsdeckel (3) aufgeschoben werden, wobei das Halteelement (7) zumindest durch eine Klemmung des Kupplungsdeckel (3) zwischen dem äußeren Arm (12), der sich, ausgehend von der Basis (9) in der radialen Richtung (10) erstreckt, und dem mittleren Arm (8) des Halteelements (7) am Kupplungsdeckel (3) fixiert ist.

7. Deckelanordnung (1) nach einem der vorhergehenden Ansprüche, wobei das Betätigungselement (6) eine Mehrzahl von Federzungen (24) aufweist, die sich ausgehend von einem Körper (19) des Betätigungselements (6) in der radialen Richtung (10) erstrecken und in einer Umfangsrichtung (16) jeweils durch Zwischenräume (20) voneinander beabstandet sind, wobei sich das Halteelement (7) ausgehend vom Kupplungsdeckel (3) mit der Basis (9) entlang der axialen Richtung (5) durch den Zwischenraum (20) hindurch erstreckt.

8. Kraftfahrzeug, zumindest aufweisend eine Reibungskupplung (2) zum Kuppeln einer Antriebswelle eines Kraftfahrzeuges mit mindestens einer Getriebeeingangswelle eines Getriebes, wobei die Reibungskupplung eine Deckelanordnung (1) nach einem der vorhergehenden Ansprüche aufweist.

## Claims

1. A cover assembly (1) for a friction clutch (2), in particular for coupling a drive shaft of a motor vehicle with at least one transmission input shaft of a transmission, at least comprising
- a clutch cover (3),
- a pressure plate (4),
- a pivotable actuating element (6) which is arranged in an axial direction (5) between the clutch cover (3) and the pressure plate (4) and which is pivotable about a pivot bearing (21) for moving the pressure plate (4) relative to the clutch cover (3), and
- at least one holding element (7);
wherein the at least one holding element (7) is fastened to the clutch cover (3) and, starting from the clutch cover (3), extends with a base (9) in the axial direction (5) beyond the actuating element (6) and has at least one central arm (8) which, starting from the base (9), extends between the clutch cover (3) and the actuating element (6) in a radial direction (10) and forms the pivot bearing (21); and further comprises at least one inner arm (11) which extends from the base (9) in the radial direction (10) so that the actuating element (6) is arranged between the central arm (8) and the inner arm (11), and further comprises at least one outer arm (12) which, starting from the base (9), extends in the radial direction (10) so that the clutch cover (3) is arranged between the outer arm (12) and the central arm (8), **characterised in that** a part of the base (9) connects the inner arm (11) to the outer arm (12), and the other part of the base (9) connects the central arm (8) to the outer arm (12).

2. The cover assembly (1) according to claim 1, wherein the holding element (7) is made in one piece.

3. The cover assembly (1) according to one of the preceding claims, wherein the holding element (7) has a locking element (13) which engages in a locking device (14) on the clutch cover (3) so that a position (15) of the holding element (7) on the clutch cover (3) is fixed at least in the radial direction (10).

4. The cover assembly (1) according to one of the preceding claims, wherein the holding element (7) is made in one piece and generates an automatic fixation on the clutch cover (3) due to the shape thereof.

5. The cover assembly (1) according to one of the preceding claims, wherein the cover assembly (1) has a plurality of holding elements (7) which are arranged in a circumferential direction (16) on an edge (17) of the clutch cover (3), wherein the holding elements (7) form the pivot bearing (21) for the actuating element (6) and centre the actuating element (6) in the radial direction (10) relative to the clutch cover (3) and a common axis of rotation (18).

6. The cover assembly (1) according to claim 5, wherein the edge (17) in the radial direction (10) points inwards and the retaining elements (7) in the radial direction (9) are pushed out onto the clutch cover (3), wherein the holding element (7) is fixed on the clutch cover (3) at least by clamping the clutch cover (3) between the outer arm (12), which extends from the base (9) in the radial direction (10), and the central arm (8) of the holding element (7).

7. The cover assembly (1) according to one of the preceding claims, wherein the actuating element (6) has a plurality of spring tongues (24), which extend from a body (19) of the actuating element (6) in the radial direction (10) and are each spaced apart from one another by spaces (20) in a circumferential direction (16), wherein the holding element (7) extends from the clutch cover (3) with the base (9) in the axial direction (5) through the intermediate space (20).

8. A motor vehicle, at least having a friction clutch (2) for coupling a drive shaft of a motor vehicle with at least one transmission input shaft of a transmission, wherein the friction clutch comprises a cover assembly (1) according to one of the preceding claims.

## Revendications

1. Ensemble couvercle (1) pour un embrayage à friction (2), en particulier pour coupler un arbre de transmission d'un véhicule automobile avec au moins un arbre d'entrée de transmission d'une transmission, comprenant au moins
- un couvercle d'embrayage (3),
- une plaque de pression (4),
- un élément d'actionnement (6), disposé dans une direction axiale (5) entre le couvercle d'embrayage (3) et la plaque de pression (4) et pivotant autour d'un palier de pivotement (21) pour déplacer la plaque de pression (4) par rapport au couvercle d'embrayage (3), et
- au moins un élément de maintien (7) ;
dans lequel au moins un élément de maintien (7) est fixé au couvercle d'embrayage (3) et, partant du couvercle d'embrayage (3), s'étend par une base (9) le long de la direction axiale (5) au-delà de l'élément d'actionnement (6) et présente au moins un bras médian (8) qui, partant de la base (9), s'étend entre le couvercle d'embrayage (3) et l'élément d'actionnement (6) dans une direction radiale (10) et forme le palier de pivot (21); et comprend en outre au moins un bras intérieur (11) qui partant de la base (9), s'étend dans la direction radiale (10), de sorte que l'élément d'actionnement (6) est agencé entre le bras médian (8) et le bras intérieur (11), et comporte en outre au moins un bras extérieur (12) qui, partant de la base (9), s'étend dans la direction radiale (10), de sorte que le couvercle d'embrayage (3) est disposé entre le bras extérieur (12) et le bras médian (8), **caractérisé en ce qu'**une partie de la base (9) relie le bras intérieur (11) au bras extérieur (12) et l'autre partie de la base (9) relie le bras médian (8) au bras extérieur (12).

2. Ensemble couvercle (1) selon la revendication 1, dans lequel l'élément de maintien (7) est réalisé en une seule pièce.

3. Ensemble couvercle (1) selon l'une quelconque des revendications précédentes, dans lequel l'élément de maintien (7) comporte un élément de verrouillage (13), qui s'engage dans un dispositif de verrouillage (14) sur le couvercle d'embrayage (3), de sorte qu'une position (15) de l'élément de maintien (7) est fixée sur le couvercle d'embrayage (3) au moins dans la direction radiale (10).

4. Ensemble couvercle (1) selon l'une quelconque des revendications précédentes, dans lequel l'élément de maintien (7) est réalisé d'une seule pièce et génère une fixation automatique sur le couvercle d'embrayage (3) en raison de sa forme.

5. Ensemble couvercle (1) selon l'une quelconque des revendications précédentes, dans lequel l'ensemble couvercle (1) présente une pluralité d'éléments de maintien (7), qui sont disposés le long d'une direction circonférentielle (16) sur un bord (17) du couvercle d'embrayage (3), dans lequel les éléments de maintien (7) forment le palier de pivotement (21) pour l'élément d'actionnement (6) et centrent l'élément d'actionnement (6) dans la direction radiale (10) par rapport au couvercle d'embrayage (3) et à un axe de rotation commun (18).

6. Ensemble couvercle (1) selon la revendication 5, dans lequel le bord (17) est dirigé vers l'intérieur dans la direction radiale (10) et les éléments de maintien (7) sont poussés vers l'extérieur dans la direction radiale (9) sur le couvercle d'embrayage (3), dans lequel l'élément de maintien (7) est fixé sur le couvercle d'embrayage (3) au moins par serrage du couvercle d'embrayage (3) entre le bras extérieur (12), qui s'étend partant de la base (9) dans la direction radiale (10), et le bras médian (8) de l'élément de maintien (7).

7. Ensemble couvercle (1) selon l'une quelconque des revendications précédentes, dans lequel l'élément d'actionnement (6) présente une pluralité de languettes à ressort (24), qui s'étendent depuis un corps (19) de l'élément d'actionnement (6) dans la direction radiale (10) et qui sont espacées les unes des autres dans une direction circonférentielle (16) par des espaces (20), l'élément de maintien (7) s'étendant dans l'espace (20) depuis le couvercle d'embrayage (3) avec la base (9) le long de la direction axiale (5).

8. Véhicule automobile, comportant au moins un embrayage à friction (2) pour coupler un arbre d'entraînement d'un véhicule automobile à au moins un arbre d'entrée de transmission d'une transmission, l'embrayage à friction ayant un ensemble couvercle (1) selon l'une quelconque des revendications précédentes.
